# EUROPÄISCHE PATENTSCHRIFT

(11) **EP 2 859 796 B1**
(45) Veröffentlichungstag und Bekanntmachung des Hinweises auf die Patenterteilung: **30.12.2020**
(21) Anmeldenummer: 14181373.3
(22) Anmeldetag: 19.08.2014
(51) Int. Cl.: A22C 13/00

(54) **Lebensmittelhülle mit biozider Ausstattung und Verfahren zu deren Herstellung**
Casings for foodstuffs with a biocidal effect and method for their manufacture
Emballage de produits alimentaires doté d'équipement biocide et son procédé de fabrication

(30) Priorität: 29.08.2013 DE 102013014301
(43) Veröffentlichungstag der Anmeldung: 15.04.2015
(73) Patentinhaber: Casetech GmbH, 29699 Bomlitz (DE)
(72) Erfinder: Krallmann, Anton, 29683 Bad Fallingbostel (DE); Henze-Wethkamp, Heinrich, 29664 Walsrode (DE)
(74) Vertreter: Godemeyer Blum Lenze Patentanwälte Partnerschaft mbB - werkpatent

(56) Entgegenhaltungen:
- EP-A1- 0 190 630
- WO-A1-2007/101495
- US-A- 5 262 211
- US-A1- 2006 073 245
- US-A1- 2013 156 896
- US-B1- 6 251 449
- Shabnam Javed ET AL: "Biocidal activity of citrus peel essential oils against some food spoilage bacteria", Journal of Medicinal Plants Research, 17 March 2011 (2011-03-17), pages 3697-3701, XP055260675, Retrieved from the Internet: URL:http://www.academicjournals.org/articl e/article1380704161_Javed et al.pdf [retrieved on 2016-10-12]

## Beschreibung

Die vorliegende Erfindung betrifft ein Verfahren zur Herstellung einer schlauchförmigen Lebensmittelhülle auf Basis von Cellulose mit biozider Ausstattung sowie die Verwendung einer Imprägniermischung enthaltend eine biozid wirksame Substanz in Form eines micellierten Solubilisats zur bioziden Ausrüstung einer Lebensmittelhülle.

Bei mit Wurst gefüllten Cellulosedarmsorten besteht das Problem, dass die Cellulosedarmsorten vor dem Füllen und insbesondere auch nach dem Füllen, also z.B. während der Reifezeit der Rohwürste, von unerwünschten Schimmelpilzen und anderen Mikroorganismen befallen werden können. Nach dem Befall können sich die Schimmelpilze und Keime auf dem Cellulosefaserdarm vermehren. Mit dem Wachstum dieser Mikroorganismen leidet die Qualität des Cellulosedarms und auch die Qualität des gefüllten Bräts. Der Cellulosedarm verliert durch den Befall mit den Mikroorganismen seine Festigkeit und die Würste mit Schimmelbefall und/oder Keimbefall sind unverkäuflich und damit wertlos.

Das eigentliche Hüllenmaterial besteht aus Cellulose, nämlich Cellulosehydrat, das auch als regenerierte Cellulose oder Zellglas bezeichnet wird. Die Celluloseschicht enthält vorzugsweise in ihrer Wandung eine Faserverstärkung, z.B. aus Hanffaserpapier, die auf einer oder beiden Oberflächen mit Cellulose bedeckt ist. Diese als Faserdarm oder Cellulosefaserdarm bezeichneten Wursthüllen werden in allen Kalibersorten eingesetzt.

Die Nahrungsmittelhülle wird auf übliche Weise, beispielsweise nach dem Viskoseverfahren, hergestellt. Hierbei wird ein Schlauch oder eine zu einem Schlauch geformte Faserbahn, z.B. aus Papier oder Hanffasern, durch eine Ringdüse auf der Innen- und/oder Außenseite mit alkalischer Viskoselösung beschichtet und mit einer sauren Fällflüssigkeit behandelt, welche die Koagulation der Viskose bewirkt. Die Viskoselösung enthält gegebenenfalls die zur Ausbildung einer weißen oder farbigen Hülle erforderlichen Farbstoffpigmente. Zur Herstellung verstärkungsfreier Cellulosehüllen wird die Viskose schlauchförmig direkt in das Fällbad ausgepresst. Der erhaltene, gegebenenfalls faserverstärkte Schlauch aus Cellulosehydrat-Gel wird nach dem Trocknen und nach der Fertigstellung auf seiner Außenseite mit der erfindungsgemäßen Beschichtung versehen.

In der Literatur sind für diese Aufgaben mehrere fungizide Verbindungen bekannt. Eine solche Methode ist in der US-A 4 867 204 (= DE-A 27 21 427) offenbart. Gemäß dieser Methode wird das Wachstum der Mikroorganismen durch ein wasserlösliches antimykotisches Mittel verhindert. Das antimykotische Mittel ist vorzugsweise Propylenglykol, Kalium-, Natrium- oder Calciumpropionat, Kalium-, Natrium- oder Calciumsorbat, Propionsäure oder ein niederer Alkylester der para-Hydroxy-benzoesäure.

Aus DE-A 198 60 142 und DE-A-196 25 094 sind Schlauchfolien bekannt, die mit Wasser und gegebenenfalls einem üblichen Fungizid, beispielsweise eine quaternäre Ammoniumverbindung, und/oder mit einem üblichen Konservierungsmittel vorzugsweise auf beide Seiten der Schlauchfolien besprüht werden.

In der EP-A 190 630 ist eine gegebenenfalls faserverstärkte Nahrungsmittelhülle auf Basis von regenerierter Cellulose, von Celluloseethern oder anderen hydrophilen Polymeren offenbart, die mit mindestens 40 - 45 Gew.-% Wasser füllfertig vorbefeuchtet ist. Um die Hülle vor dem Befall mit Bakterien, Schimmelpilzen oder anderen Mikroorganismen zu schützen, ist sie mit einem antimykotisch wirksamen Mittel behandelt. Das Mittel ist bevorzugt ein para-Hydroxybenzoesäurealkylester. Eine Hülle aus filmbildenden, hydrophilen Polymeren, insbesondere aus regenerierter Cellulose, ist auch in der US-A 3 864 499 beschrieben. Dispergiert in den Polymeren sind öl-lösliche Additive, insbesondere Anti-Oxidantien, Biocide, Farbstoffe, UV-Absorber, Geschmacks- oder Geruchsstoffe. Daneben ist eine Cellulose-Wursthülle offenbart, die ein lebensmittelrechtlich zugelassenes Antimykotikum enthält. Das Antimykotikum ist bevorzugt para-Hydroxybenzoesäuremethylester, -ethylester oder -propylester.

Ein Verfahren zur Herstellung einer cellulosebasierten Lebensmittelhülle ist in der US 2013/156896 A1 beschrieben.

Es ist nun Aufgabe der Erfindung, schlauchförmige Hüllen auf Basis von Cellulose so zu behandeln oder auszurüsten, dass auch nach dem Befall der Hüllen mit Schimmelpilzen und Keimen das Wachstum auf den Hüllen sicher verhindert wird. Im Idealfall wird von außen eine Imprägnierung oder eine Überzugsschicht mit einer entsprechenden bioziden Wirksubstanz aufgetragen.

Weiterhin ist es Aufgabe der Erfindung, dass die Behandlung oder Ausrüstung oder die von außen aufgebrachte Imprägnierung im Großen und Ganzen wässerungsstabil ist. Da Cellulosefaserdarm vor dem Füllvorgang gewässert wird, muss die Imprägnierung so beschaffen sein, dass die biozide Wirkung auch noch nach der üblichen Wässerungszeit ohne nennenswerten Verlust gegeben ist.

Es wurde nun überraschenderweise gefunden, dass eine biozid wirksame Substanz, wenn sie in Form eines micellierten Solubilisats in einer wässrigen Mischung bzw. in wässriger Lösung auf eine schlauchförmige Lebensmittelhülle aufgebracht wird, bei einer üblichen Wässerung kaum ausgewaschen wird und somit ihre Wirksamkeit auf der Lebensmittelhülle erhalten bleibt.

Gelöst wird die oben genannte Aufgabe daher durch ein Verfahren zur Herstellung einer schlauchförmigen Lebensmittelhülle gemäss Anspruch 1.

In einer bevorzugten Ausführungsform der Erfindung umfasst das zuvor beschriebene Verfahren die folgenden Schritte:
a) Bereitstellen einer schlauchförmigen Lebensmittelhülle;
b) Bereitstellen eines micellierten Solubilisats umfassend
   i) eine biozid wirksame Substanz,
   ii) ein Triglycerid, und
   iii) einen Lösungsvermittler;
c) Mischen des micellierten Solubilisats mit Wasser unter Erhalt einer wässrigen Imprägniermischung; und
d) Aufbringen der wässrigen Imprägniermischung zumindest auf die Außenseite der bereitgestellten schlauchförmigen Lebensmittelhülle.

Das micellierte Solubilisat kann weitere Bestandteile umfassen, zum Beispiel zusätzliches Wasser.

Als biozid wirksame Substanz und/oder als weitere biozid wirksame Substanz wird unabhängig voneinander eine oder mehrere der folgenden Substanzen ausgewählt: Sorbinsäure, dessen Derivate und Salze; Benzoesäure, dessen Derivate und Salze; Isoascorbinsäure, dessen Derivate und Salze, z.B. Natriumisoascorbinat; Ascorbinsäure, dessen Derivate und Salze, z.B. Ascorbinsäure-2-Phosphat, Ascorbinsäure-2-Triphosphat, Ascorbylpalmitat, Ascorbylphosphat; Zitronensäure, dessen Derivate und Salze; Ferulasäure, dessen Derivate und Salze; Weinsäure, dessen Derivate und Salze; Apfelsäure, dessen Derivate und Salze; Terpineole, und dessen Derivate; Carvacrol, und dessen Derivate; Citral, dessen Derivate und Salze; Eugenol, und dessen Derivate; Geraniol, und dessen Derivate; Perillaldehyde, und dessen Derivate; Pelargonienwurzelextrakt; Thymol.

Als biozid wirksame Substanz und/oder als weitere biozid wirksame Substanz kann auch unabhängig voneinander und unbeschadet der im vorherigen Abschnitt genannten Substanzen eine oder mehrere der folgenden Substanzen ausgewählt werden: Citrusfrucht-Extrakt, Thymian-Extrakt, Rosmarin-Extrakt, Salbei-Extrakt, Oregano-Extrakt, Gewürznelken-Extrakt, Zimt-Extrakt, Johannesbeeren-Extrakt, Soya-Extrakt, Grüner-Tee-Extrakt, Knoblauch-Extrakt, Oliven-Extrakt, Zwiebel-Extrakt, Lauch-Extrakt, Kürbis-Samen-Extrakt, Zitronenmelisse-Extrakt, Pelargonienwurzel-Extrakt, Echte-Kamille-Extrakt, Kurkuma-Extrakt, Traubenkernöl.

In einer bevorzugten Ausführungsform des erfindungsgemäßen Verfahrens wird als weitere biozid wirksame Substanz ein Citrusfrucht-Extrakt, bevorzugt ein Extrakt aus der Flavedo- und/oder Albedo-Schicht von Citrusfrüchten, ausgewählt.

Nach dem erfindungsgemäßen Verfahren ist es eine Option, die wässrige Imprägniermischung zusätzlich auch auf die Innenseite der bereitgestellten schlauchförmigen Lebensmittelhülle aufzubringen.

Die in dem erfindungsgemäßen Verfahren verwendete schlauchförmige Lebensmittelhülle ist vorzugsweise eine cellulosebasierte Lebensmittelhülle, eine Lebensmittelhülle auf Textilbasis, eine collagenbasierte Lebensmittelhülle oder eine polymerbasierte Lebensmittelhülle.

In dem erfindungsgemäßen Verfahren werden zur Bildung des micellierten Solubilisats Triglyceride verwendet. Bevorzugte Triglyceride sind die mittelkettigen Triglyceride gemäß CAS-Nr. 73398-61-5.

In dem erfindungsgemäßen Verfahren werden zur Bildung des micellierten Solubilisats Lösungsvermittler verwendet. Als Lösungsvermittler kann eine oder mehrere der folgenden Substanzen ausgewählt werden: Polyoxyethylen-(40)-stearat; Polyoxyethylen-sorbitan-monolaurat (Polysorbat 20); Polyoxyethylen-sorbitan-monooleat (Polysorbat 80); Polyoxyethylen-sorbitan-monopalmitat (Polysorbat 40); Polyoxyethylen-sorbitan-monostearat (Polysorbat 60); Polyoxyethylen-sorbitan-tristearat (Polysorbat 65); Pektin; Amidiertes Pektin; Ammoniumphosphatide; Saccharoseacetatisobutyrat; Glycerinester aus Wurzelharz; Diphosphate; Triphosphate; Polyphosphate; Cellulose; Methylcellulose; Hydroxypropylcellulose; Hydroxypropyl-methyl-cellulose; Ethylmetylcellulose; Carboxymethylcellulose; Natrium-, Kalium- und Calciumsalze von Speisefettsäuren; Monoglyceride und Diglyceride von Speisefettsäuren; Essigsäureester von Monoglyceriden und Diglyceriden von Speisefettsäuren; Mono- und Diglyceride von Speisefettsäuren, verestert mit Milchsäure (Milchsäureester); Monoglyceride von Speisefettsäuren, verestert mit Citronensäure (Citronensäureester); Monoglyceride und Diglyceride von Speisefettsäuren, verestert mit Weinsäure (Weinsäureester); Monoglyceride und Diglyceride von Speisefettsäuren, verestert mit Acetylweinsäure; Monoglyceride und Diglyceride von Speisefettsäuren, verestert mit Essigsäure und Weinsäure (Essigsäureester-Weinsäureester); Zuckerester von Speisefettsäuren; Zuckerglyceride; Polyglycerinester von Speisefettsäuren; Polyglycerin-Polyricinoleat; Propylenglycolester von Speisefettsäuren; Natriumstearoyl-2-lactylat; Calciumstearoyl-2-lactylat; Stearoyltartrat; Sorbitanmonostearat; Sorbitantristearat; Sorbitanmonolaureat; Sorbitanmonooleat; Sorbitanmonopalmitat.

Sinnvoll hat sich auch die Zugabe von bekannten Konservierungsmitteln wie Kaliumsorbat oder Natriumsorbat in Verbindung mit leicht abgesenktem pH-Wert auf ca. 3-3,5 erwiesen. Der pH-Wert kann z.B. über die Zugabe von Citronensäure abgesenkt werden.

In einer besonders bevorzugten Ausführungsform der Erfindung umfasst das zuvor beschriebene Verfahren die folgenden Schritte:
a) Bereitstellen einer schlauchförmigen cellulosebasierten Lebensmittelhülle, oder einer schlauchförmigen Lebensmittelhülle auf Textilbasis, oder einer schlauchförmigen collagenbasierten Lebensmittelhülle oder einer schlauchförmigen polymerbasierten Lebensmittelhülle;
b1) Bereitstellen eines micellierten Solubilisats umfassend
   i) eine biozid wirksame Substanz, bevorzugt eine oder mehrere Substanzen ausgewählt aus der Gruppe umfassend Thymian-Extrakt, Rosmarin-Extrakt, Salbei-Extrakt, Oregano-Extrakt, Gewürznelken-Extrakt, Zimt-Extrakt, Johannesbeeren-Extrakt, Soya-Extrakt, Grüner-Tee-Extrakt, Knoblauch-Extrakt, Oliven-Extrakt, Zwiebel-Extrakt, Lauch-Extrakt, Kürbis-Samen-Extrakt, Zitronenmelisse-Extrakt, Pelargonienwurzel-Extrakt, Echte-Kamille-Extrakt, Kurkuma-Extrakt, und Traubenkernöl;
   ii) ein mittelkettiges Triglyceride gemäß CAS-Nr. 73398-61-5;
   iii) einen Lösungsvermittler; und
   iv) Wasser;
b2) Bereitstellen einer weiteren biozid wirksamen Substanz, bevorzugt ein Citrusfrucht -Extrakt;
c) Mischen des micellierten Solubilisats und der weiteren biozid wirksamen Substanz mit Wasser unter Erhalt einer wässrigen Imprägniermischung; und
d) Aufbringen der wässrigen Imprägniermischung zumindest auf die Außenseite der bereitgestellten schlauchförmigen Lebensmittelhülle.

Nach dem erfindungsgemäßen Verfahren kann die Lebensmittelhülle auch gerafft werden. Dabei zeigt sich, dass die fungizide Wirksamkeit der erfindungsgemäßen Imprägnierung erhalten bleibt, wenn die gerafften Hüllen mit Wurstbrät gefüllt und dabei entrafft werden.

Das Aufbringen der Imprägniermischung kann auf übliche Weisen erfolgen. In der Regel wird die Lebensmittelhülle bahnförmig über eine Umrollmaschine umgerollt und beim Umrollen wird diese auf beiden Seiten mit der Imprägnierung versehen. Die Imprägnierung kann z.B. dadurch erfolgen, dass die Lebensmittelhülle durch ein Flüssigkeitsbad läuft, oder dass die Imprägniermischung durch Besprühen aufgetragen wird. Es kann weiterhin auch mit einem Walzenauftrag, ähnlich dem Druckvorgang aufgebracht werden. Besonders effektiv ist es, wenn die Imprägniermischung fein verteilt auf die Oberfläche der Lebensmittelhülle gelangt. Hier bieten sich das Sprühen durch feine Düsen oder eine Verteilung durch eine Ultraschallaufbereitung an. Die feine Verteilung beim Sprühverfahren wird durch einen hohen Druck durch die Düsen erreicht, wobei die fein verteilten Tröpfchen auf sehr hohe Geschwindigkeiten beschleunigt werden. Mit Hilfe einer Ultraschallanlage lassen sich kleinere Tröpfchengröße erzeugen, so dass noch eine bessere Verteilung auf der Lebensmittelhülle erzielt werden kann.

Bei der Sprühmethode kann die Imprägniermischung über 1 oder 2 oder mehrere Stoffdüsen bei einem Flüssigkeitsdruck von ca. 2 bis 6 bar und bei einer Düsengröße von z.B. 0,5 mm versprüht werden. Die Durchflussmenge wird so eingestellt, dass die Lebensmittelhülle beim Raffvorgang eine Menge von 0,5 bis 5 Gew.-%, bevorzugt eine Menge von 2 bis 3,5 %, bezogen auf den trocken eingesetzten Darm, erhält. Für eine gute Verteilung der Wirksubstanz(en) ist die beim Versprühen erzielte Tröpfchengröße mit entscheidend. Je feiner die Tröpfchengröße beim Versprühen eingestellt werden kann, desto dichter liegen die Tröpfchen auf der Oberfläche der Lebensmittelhülle beieinander. Je kleiner der Tröpfchenabstand desto größer ist die Wirksamkeit gegenüber unerwünschter Schimmelbildung. Bei einer Tröpfchengröße von ca. 20 bis 50 µm werden die besten Ergebnisse erzielt.

Ein weiterer Gegenstand der vorliegenden Erfindung ist auch eine Lebensmittelhülle hergestellt nach dem zuvor beschriebenen Verfahren.

Gegenstand der vorliegenden Erfindung sind naturgemäß auch Würste umfassend eine wie oben beschriebene erfindungsgemäße Lebensmittelhülle und gefüllt mit Wurstbrät.

Noch ein weiterer Gegenstand der vorliegenden Erfindung ist die Verwendung einer Imprägniermischung enthaltend eine biozid wirksame Substanz in Form eines micellierten Solubilisats zur bioziden Ausrüstung einer Lebensmittelhülle, wobei das micellierte Solubilisat neben der biozid wirksamen Substanz noch ein Triglycerid und einen Lösungsvermittler umfasst, dadurch gekennzeichnet, dass die Imprägniermischung eine wässrige Imprägniermischung ist.

Die Erfindung wird durch die nachfolgenden Beispiele näher erläutert.

### Beispiele

### Beispiel 1:

Ein nicht eingefärbter Walsroder Cellulosefaserdarm (FRO, Füllkaliber 76) wird im flach gelegten Zustand beim Raffvorgang durch eine Sprühkammer geführt und dabei von beiden Seiten mit einer Mischung aus 95,93 Gew.-% Wasser, 3,78 Gew.-% Novasol PSP (Solubilisat mit Micellarstruktur enthaltend Lösungsvermittler, mittelkettige Triglyceride und in Micellen eingeschlossen mind. 30 Gew.-% einer Phyto-Extrakt-Mischung bestehend aus den Pflanzenextrakten Oliven-, Knoblauch-, Zwiebel- und Zitrus-Extrakt, sowie Glycerin und Ascorbinsäure; erhältlich durch Firma Aquanova Darmstadt) und 0,29 Gew.-% Novasol Rosmary (Solubilisat mit Micellarstruktur enthaltend Lösungsvermittler, mittelkettige Triglyceride und in Micellen eingeschlossen Rosmarin-Extrakt enthaltend Carnosolsäure; Gesamtgehalt Carnosolsäure mind. 6 Gew.-%; erhältlich durch Firma Aquanova Darmstadt), jeweils bezogen auf die Mischung, mit einer Menge von 20 Gew.-%, bezogen auf den Darm, besprüht. Nach dem Sprühvorgang sind auf der Oberfläche folgende Stoffe aufgetragen: 16,5 g/m² Wasser, 0,65 g/m² Novasol PSP, und 0,05 g/m² Novasol Rosmary.

Nach dem Auftragen gelangt der Darm in die Quetschwalzen der Raffmaschine und wird dort gerafft. Vor dem Füllen wird der geraffte Darm für 30 Minuten gewässert und dann mit Rohwurst gefüllt. Direkt nach dem Füllen werden die Würste zur Hälfte in eine Kulturschimmellösung getaucht und anschließend im waagerechten Zustand in die Reifekammer gelegt. Die obere Hälfte wird mit dem Schimmelpilz Pencillium auras spotweise an drei Stellen beimpft.

### Beispiel 2

Wie im Beispiel 1 wird der genannte Darm mit einer Mischung während des Raffvorganges besprüht, so dass auf der Oberfläche des Darmes eine Mischung von 14,5 g/m² Paraffinöl, 0,65 g/m² Novasol PSP und 0,05 g/m² Novasol Rosmary gelangt. Vor dem Füllen wird der geraffte für 30 Minuten gewässert und dann mit Rohwurst gefüllt. Die Beimpfung wird in der gleichen Weise durchgeführt wie beim Beispiel 1.

### Beispiel 3:

Der in Beispiel 1 genannte Darm bekommt zu der oben genannten Mischung noch 0,65 g/m² Biosecur F440D (enthaltend 57-64 Gew.-% Glycerin und 37-42 Gew.-% Extrakt aus Flavedo- und Albedo-Schichten von Citrusfrüchten; erhältlich durch Firma Biosecur Lab Inc., Canada) und wird in der gleichen Weise behandelt wie in den Beispielen 1 und 2.

### Beispiel 4:

Der in Beispiel 2 genannte Darm bekommt zu der oben genannten Mischung noch 0,65 g/ m² Biosecur F440D und wird in der gleichen Weise behandelt wie in den Beispielen 1, 2 und 3.

### Beispiel 5:

Der gleiche wie in Beispiel 1 genannte Darm wird mit der gleichen Rezeptur aus Beispiel 1 jeweils außen und innen mittels des bekannten "Blasenverfahrens" mit der gleichen Menge der angegebenen Rezeptur bezogen auf das Gewicht des Trockendarm ausgerüstet.

### Beispiel 6:

Der gleiche wie in Beispiel 1 genannte Darm wird mit der gleichen Rezeptur aus Beispiel 3 jeweils außen und innen mittels des bekannten "Blasenverfahrens" mit der gleichen Menge der angegebenen Rezeptur bezogen auf das Gewicht des Trockendarm ausgerüstet.

### Vergleichsbeispiel 1:

Der in Beispiel 1 genannte Darm wird nur von außen für den Raffprozess mit 16,5 g/m² Wasser besprüht und im Übrigen wie in den anderen Beispielen behandelt.

### Vergleichsbeispiel 2:

Der in Beispiel 1 genannte Darm wird nur von außen für den Raffprozess mit 14,5 g/m² Paraffinöl besprüht und im Übrigen wie in den anderen Beispielen behandelt.

### Testverfahren:

Mit Darm: Penicilium nalgiovense: Die Würste werden kurzzeitig in eine verdünnte Lösung (bei 20 °C) Penicilium nalgiovense Schimmellösung getaucht, die aus 99,7 % Wasser und 0,3 % M-EK-72 Mold der Fa. Chr. Hansen besteht. Nach einer Lagerzeit von 5 Tage wird das Schimmelwachstum bewertet.
   Penicilium solitum: Eine Lösung aus Penicilium solitum und Wasser wird auf den Würsten an 3 Stellen auf den Darm in einem Bereich von ca. 2- 5 mm² aufgetragen. Nach einer Lagerzeit von 5 Tage wird das Schimmelwachstum an den aufgetragenen Stellen bewertet.
Ohne Darm: Penicilium nalgiovense: Die Würste werden geschält und dann ohne Darm kurzzeitig in eine verdünnte Lösung (bei 20 °C) Penicilium nalgiovense Schimmellösung getaucht, die aus 99,997 % Wasser und 0,003 % M-EK-72 Mold der Fa. Chr. Hansen besteht. Nach einer Lagerzeit von 5 Tage wird das Schimmelwachstum bewertet.
   Penicilium solitum: Die Würste werden geschält und eine Lösung aus Penicilium solitum und Wasser wird an 3 Stellen auf der Wurst in einem Bereich von ca. 2- 5 mm² aufgetragen. Nach einer Lagerzeit von 5 Tage wird das Schimmelwachstum an den aufgetragenen Stellen bewertet.

### Beurteilungskriterien

Wenn die Schimmelsporen die Oberfläche des Darms bzw. des Wurstbräts nach der Wartezeit komplett bedeckt haben, wird die Note 6 und bei keinerlei Wachstum des Schimmels die Note 1 vergeben. Die Ergebnisse der Beurteilungen der Beispiele 1 bis 6 sowie Vergleichsbeispiele 1 bis 2 finden sich in Tabelle 2.

**Tabelle 1: Übersicht Beispiele 1 bis 6 sowie Vergleichsbeispiele 1 bis 2.**

| **Beispiel** | **1** | **2** | **3** | **4** | **5** | **6** | | |
|---|---|---|---|---|---|---|---|---|
| **Vergl.-Bsp.** | | | | | | | **1** | **2** |
| Darm | FRO 76 | FRO 76 | FRO 76 | FRO 76 | FRO 76 | FRO 76 | FRO 76 | FRO 76 |
| Komp. | **Rezeptur außen auf der Oberfläche** | | | | | | | |
| 1 | 16,5 g/m² Wasser | 14,5 g/m² Paraffinöl | 16,5 g/m² Wasser | 14,5 g/m² Paraffinöl | 16,5 g/m² Wasser | 16,5 g/m² Wasser | 16,5 g/m² Wasser | 14,5 g/m² Paraffinöl |
| 2 | 0,65 g/m² Nowasol PSP | 0,65 g/m² Nowasol PSP | 0,65 g/m² Nowasol PSP | 0,65 g/m² Nowasol PSP | 0,65 g/m² Nowasol PSP | 0,65 g/m² Nowasol PSP | | |
| 3 | 0,05 g/m² Nowasol Rosmary | 0,05 g/m² Nowasol Rosmary | 0,05 g/m² Nowasol Rosmary | 0,05 g/m² Nowasol Rosmary | 0,05 g/m² Nowasol Rosmary | 0,05 g/m² Nowasol Rosmary | | |
| 4 | | | 0,65 g/m² Biosecur | 0,65 g/m² Biosecur | | 0,65 g/m² Biosecur | | |

| Komp. | **Rezeptur innen auf der Oberfläche** | | | | | | | |
|---|---|---|---|---|---|---|---|---|
| 1 | | | | | 16,5 g/m² Wasser | 16,5 g/m² Wasser | | |
| 2 | | | | | 0,65 g/m² Nowasol PSP | 0,65 g/m² Nowasol PSP | | |
| 3 | | | | | 0,05 g/m² Nowasol Rosmary | 0,05 g/m² Nowasol Rosmary | | |
| 4 | | | | | | 0,65 g/m² Biosecur | | |

**Tabelle 2: Ergebnisse der Beurteilungen der Beispiele 1-6 und Vergl.-Beispiele 1-2.**

| **Beispiel** | **1** | **2** | **3** | **4** | **5** | **6** | | |
|---|---|---|---|---|---|---|---|---|
| **Vergleichsbeispiel** | | | | | | | **1** | **2** |
| Wirkung gegen Penicilium nalgiovense mit Darm auf der Wurst | 1 | 1,5 | 1 | 2 | 1 | 1 | 6 | 6 |
| Wirkung gegen Penicilium solitum mit Darm auf der Wurst | 4 | 5 | 1,5 | 2 | 4 | 1,5 | 6 | 6 |
| Wirkung gegen Penicilium nalgiovense ohne Darm auf der Wurst | 5 | 5 | 5 | 5 | 1,5 | 1 | 5 | 5 |
| Wirkung gegen Penicilium solitum ohne Darm auf der Wurst | 5 | 5 | 5 | 5 | 4 | 2 | 5 | 5 |

## Patentansprüche

1. Verfahren zur Herstellung einer schlauchförmigen cellulosebasierten Lebensmittelhülle umfassend das Aufbringen einer wässrigen Imprägniermischung zumindest auf die Außenseite der schlauchförmigen Lebensmittelhülle, wobei die Imprägniermischung ein micelliertes Solubilisat und Wasser enthält, und wobei das micellierte Solubilisat eine biozid wirksame Substanz, ein Triglycerid und einen Lösungsvermittler umfasst, wobei in die wässrige Imprägniermischung zusätzlich mindestens eine weitere biozid wirksame Substanz eingemischt wird und wobei die biozid wirksame Substanz und die weitere biozid wirksame Substanz unabhängig voneinander ausgewählt sind aus der Gruppe umfassend Citrusfrucht-Extrakt, Thymian-Extrakt, Rosmarin-Extrakt, Salbei-Extrakt, Oregano-Extrakt, Gewürznelken-Extrakt, Zimt-Extrakt, Johannesbeeren-Extrakt, Soya-Extrakt, Grüner-Tee-Extrakt, Knoblauch-Extrakt, Oliven-Extrakt, Zwiebef-Extrakt, Lauch-Extrakt, Kürbis-Samen-Extrakt, Zitronenmelisse-Extrakt, Pelargonienwurzel-Extrakt, Echte-Kamille-Extrakt, Kurkuma-Extrakt, Traubenkernöl.

2. Verfahren nach Anspruch 1 umfassend die folgenden Schritte:
a) Bereitstellen einer schlauchförmigen cellulosebasierten Lebensmittelhülle;
b) Bereitstellen eines micellierten Solubilisats umfassend
i) eine biozid wirksame Substanz,
ii) ein Triglycerid, und
iii) einen Lösungsvermittler;
c) Mischen des micellierten Solubilisats mit Wasser unter Erhalt einer wässrigen Imprägniermischung; und
d) Aufbringen der wässrigen Imprägniermischung zumindest auf die Außenseite der bereitgestellten schlauchförmigen Lebensmittelhülle.

3. Verfahren nach Anspruch 1 oder 2, wobei das micellierte Solubilisat zusätzlich Wasser umfasst.

4. Verfahren nach einem der vorherigen Ansprüche, wobei die weitere biozid wirksame Substanz ein Citrusfrucht-Extrakt, bevorzugt ein Extrakt aus der Flavedo- und/oder Albedo-Schicht von Citrusfrüchten, ist.

5. Verfahren nach einem der vorherigen Ansprüche, wobei die wässrige Imprägniermischung zusätzlich auf die Innenseite der bereitgestellten schlauchförmigen Lebensmittelhülle aufgebracht wird.

6. Verfahren nach einem der vorherigen Ansprüche, wobei die schlauchförmige Lebensmittelhülle eine cellulosebasierte Lebensmittelhülle, eine Lebensmittelhülle auf Textilbasis, eine collagenbasierte Lebensmittelhülle oder eine polymerbasierte Lebensmittelhülle ist.

7. Verfahren nach einem der vorherigen Ansprüche, wobei das Triglycerid ein mittelkettiges Triglycerid [CAS-Nr. 73398-61-5] ist.

8. Verfahren nach einem der vorherigen Ansprüche, wobei der Lösungsvermittler ausgewählt ist aus der Gruppe umfassend Polyoxyethylen-(40)-stearat; Polyoxyethylen-sorbitan-monolaurat (Polysorbat 20); Polyoxyethylen-sorbitan-monooleat (Polysorbat 80); Polyoxyethylen-sorbitan-monopalmitat (Polysorbat 40); Polyoxyethylen-sorbitan-monostearat (Polysorbat 60); Polyoxyethylen-sorbitan-tristearat (Polysorbat 65); Pektin; Amidiertes Pektin; Ammoniumphosphatide; Saccharoseacetatisobutyrat; Glycerinester aus Wurzelharz; Diphosphate; Triphosphate; Polyphosphate; Cellulose; Methylcellulose; Hydroxypropylcellulose; Hydroxypropyl-methyl-cellulose; Ethylmetylcellulose; Carboxymethylcellulose; Natrium-, Kalium- und Calciumsalze von Speisefettsäuren; Monoglyceride und Diglyceride von Speisefettsäuren; Essigsäureester von Monoglyceriden und Diglyceriden von Speisefettsäuren; Mono- und Diglyceride von Speisefettsäuren, verestert mit Milchsäure (Milchsäureester); Monoglyceride von Speisefettsäuren, verestert mit Citronensäure (Citronensäureester); Monoglyceride und Diglyceride von Speisefettsäuren, verestert mit Weinsäure (Weinsäureester); Monoglyceride und Diglyceride von Speisefettsäuren, verestert mit Acetylweinsäure; Monoglyceride und Diglyceride von Speisefettsäuren, verestert mit Essigsäure und Weinsäure (Essigsäureester-Weinsäureester); Zuckerester von Speisefettsäuren; Zuckerglyceride; Polyglycerinester von Speisefettsäuren; Polyglycerin-Polyricinoleat; Propylenglycolester von Speisefettsäuren; Natriumstearoyl-2-lactylat; Calciumstearoyl-2-lactylat; Stearoyltartrat; Sorbitanmonostearat; Sorbitantristearat; Sorbitanmonolaureat; Sorbitanmonooleat; Sorbitanmonopalmitat.

9. Verfahren nach einem der vorherigen Ansprüche, wobei nach dem Aufbringen der wässrigen Imprägniermischung auf die Lebensmittelhülle diese gerafft wird.

10. Lebensmittelhülle hergestellt nach einem Verfahren nach einem der Ansprüche 1 bis 9.

11. Wurst umfassend eine Lebensmittelhülle nach Anspruch 10 sowie von der Lebensmittelhülle umschlossenes Wurstbrät.

12. Verwendung einer Imprägniermischung enthaltend eine biozid wirksame Substanz in Form eines micellierten Solubilisats zur bioziden Ausrüstung einer cellulosebasierten Lebensmittelhülle, wobei das micellierte Solubilisat neben der biozid wirksamen Substanz noch ein Triglycerid und einen Lösungsvermittler umfasst, **dadurch gekennzeichnet, dass** die Imprägniermischung eine wässrige Imprägniermischung ist, wobei in die wässrige Imprägniermischung zusätzlich mindestens eine weitere biozid wirksame Substanz eingemischt wird und wobei die biozid wirksame Substanz und die weitere biozid wirksame Substanz unabhängig voneinander ausgewählt sind aus der Gruppe umfassend Citrusfrucht-Extrakt, Thymian-Extrakt, Rosmarin-Extrakt, Salbei-Extrakt, Oregano-Extrakt, Gewürznelken-Extrakt, Zimt-Extrakt, Johannesbeeren-Extrakt, Soya-Extrakt, Grüner-Tee-Extrakt, Knoblauch-Extrakt, Oliven-Extrakt, Zwiebel-Extrakt, Lauch-Extrakt, Kürbis-Samen-Extrakt, Zitronenmelisse-Extrakt, Pelargonienwurzel-Extrakt, Echte-Kamille-Extrakt, Kurkuma-Extrakt, Traubenkernöl.

## Claims

1. A method for manufacturing a tubular cellulose-based foodstuff casing, comprising applying an aqueous impregnation mixture at least to the outside of the tubular foodstuff casing, wherein the impregnation mixture contains a micellized solubilizate and water, and wherein the micellized solubilizate comprises a biocidally active substance, a triglyceride and a solubilizer, wherein at least one other biocidally active substance is admixed to the biocidally active substance, and wherein the biocidally active substance and the other biocidally active substance are independently of each other selected from the group comprising citrus fruit extract, thyme extract, rosemary extract, sage extract, oregano extract, clove extract, cinnamon extract, currant extract, soy extract, green tea extract, garlic extract, olive extract, onion extract, leek extract, pumpkin seed extract, lemon balm extract, pelargonium root extract, chamomile extract, turmeric extract, grape seed oil.

2. The method according to claim 1, comprising the steps of:
a) providing a tubular cellulose-based foodstuff casing;
b) providing a micellized solubilizate, comprising
i) a biocidally active substance,
ii) a triglyceride, and
iii) a solubilizer;
c) mixing the micellized solubilizate with water to obtain an aqueous impregnation mixture; and
d) applying the aqueous impregnation mixture at least to the outside of the provided tubular foodstuff casing.

3. The method according to claim 1 or 2, wherein the micellized solubilizate additionally comprises water.

4. The method according to any one of the preceding claims, wherein the other biocidally active substance is a citrus fruit extract, preferably an extract from the flavedo and/or albedo layer of citrus fruits.

5. The method according to any one of the preceding claims, wherein the aqueous impregnation mixture is additionally applied to the inside of the provided tubular foodstuff casing.

6. The method according to any one of the preceding claims, wherein the tubular foodstuff casing is a cellulose-based foodstuff casing, a textile-based foodstuff casing, a collagen-based foodstuff casing or a polymer-based foodstuff casing.

7. The method according to any one of the preceding claims, wherein the triglyceride is a medium-chain triglyceride [CAS no. 73398-61-5].

8. The method according to any one of the preceding claims, wherein the solubilizer is selected from the group comprising polyoxyethylene (40) stearate; polyoxyethylene sorbitan monolaurate (polysorbate 20); polyoxyethylene sorbitan monooleate (polysorbate 80); polyoxyethylene sorbitan monopalmitate (polysorbate 40), polyoxyethylene sorbitan monostearate (polysorbate 60); polyoxyethylene sorbitan tristearate (polysorbate 65); pectin; amidated pectin; ammonium phosphatides; sucrose acetate isobutyrate; glycerol ester from wood rosin, diphosphates; triphosphates; polyphosphates; cellulose; methyl cellulose; hydroxypropyl cellulose; hydroxypropyl methyl cellulose; ethyl methyl cellulose; carboxymethyl cellulose; sodium, potassium and calcium salts of edible fatty acids; monoglycerides and diglycerides of edible fatty acids; acetic acid esters of monoglycerides and diglycerides of edible fatty acids; mono and diglycerides of edible fatty acids esterified with lactic acid (lactic acid esters); monoglycerides of edible fatty acids esterified with citric acid (citric acid esters); monoglycerides and diglycerides of edible fatty acids esterified with tartaric acid (tartaric acid esters); monoglycerides and diglycerides of edible fatty acids esterified with acetyltartaric acid; monoglycerides and diglycerides of edible acids esterified with acetic acid and tartaric acid (acetic-acid and tartaric-acid esters); sucrose esters of edible fatty acids; sucroglycerides; polyglycerol esters of edible fatty acids; polyglycerol polyricinoleate; propylene glycol esters of edible fatty acids; sodium stearoyl-2-lactylate; calcium stearoyl-2-lactylate, steaoryl tartrate; sorbitan monostearate; sorbitan tristearate; sorbitan monolaureate; sorbitan monooleate; sorbitan monopalmitate.

9. The method according to any one of the preceding claims, wherein the foodstuff casing is shirred after applying the aqueous impregnation mixture to said foodstuff casing.

10. A foodstuff casing manufactured according to a method according to any one of claims 1 to 9.

11. A sausage, comprising a foodstuff casing according to claim 10, and sausage meat, enclosed by said foodstuff casing.

12. Using an impregnation mixture containing a biocidally active substance in the form of a micellized solubilizate for a biocidal treatment of a cellulose-based foodstuff casing, wherein the micellized solubilizate comprises, besides the biocidally active substance, a triglyceride and a solubilizer, **characterized in that** said impregnation mixture is an aqueous impregnation mixture, wherein at least one other biocidally active substance is additionally admixed to the aqueous impregnation mixture and wherein the biocidally active substance and the other biocidally active substance are selected independently of each other from the group comprising citrus fruit extract, thyme extract, rosemary extract, sage extract, oregano extract, clove extract, cinnamon extract, currant extract, soy extract, green tea extract, garlic extract, olive extract, onion extract, leek extract, pumpkin seed extract, lemon balm extract, pelargonium root extract, chamomile extract, turmeric extract, grape seed oil.

## Revendications

1. Procédé de production d'une enveloppe de produit alimentaire de forme tubulaire à base de cellulose comprenant l'application d'un mélange d'imprégnation aqueux au moins sur le côté extérieur de l'enveloppe de produit alimentaire de forme tubulaire, dans lequel le mélange d'imprégnation contient un solubilisat micellisé et de l'eau, et dans lequel le solubilisat micellisé comprend une substance à action biocide, un triglycéride et un agent solubilisant, dans lequel dans le mélange d'imprégnation aqueux est en outre mélangée au moins une substance à action biocide supplémentaire et dans lequel la substance à action biocide et la substance à action biocide supplémentaire sont sélectionnées indépendamment l'une de l'autre dans le groupe comprenant extrait d'agrume, extrait de thym, extrait de romarin, extrait de sauge, extrait d'origan, extrait de clou de girofle, extrait de cannelle, extrait de cassis, extrait de soja, extrait de thé vert, extrait d'ail, extrait d'olive, extrait d'oignon, extrait de poireau, extrait de graines de citrouille, extrait de mélisse citronnelle, extrait de racine de pélargonium, véritable extrait de camomille, extrait de curcuma, huile de pépins de raisin.

2. Procédé selon la revendication 1, comprenant les étapes suivantes consistant à :
a) produire une enveloppe de produit alimentaire de forme tubulaire à base de cellulose ;
b) produire un solubilisat micellisé comprenant
i) une substance à action biocide,
ii) un triglycéride, et
iii) un agent solubilisant ;
c) mélanger le solubilisat micellisé avec de l'eau pour obtenir un mélange d'imprégnation aqueux ; et
d) appliquer le mélange d'imprégnation aqueux au moins sur le côté extérieur de l'enveloppe de produit alimentaire de forme tubulaire produite.

3. Procédé selon la revendication 1 ou 2, dans lequel le solubilisat micellisé comprend en outre de l'eau.

4. Procédé selon l'une quelconque des revendications précédentes, dans lequel la substance à action biocide supplémentaire est un extrait d'agrume, de préférence un extrait de la couche de flavédo et/ou d'albédo d'agrumes.

5. Procédé selon l'une quelconque des revendications précédentes, dans lequel le mélange d'imprégnation aqueux est en outre appliqué sur le côté intérieur de l'enveloppe de produit alimentaire de forme tubulaire produite.

6. Procédé selon l'une quelconque des revendications précédentes, dans lequel l'enveloppe de produit alimentaire de forme tubulaire est une enveloppe de produit alimentaire à base de cellulose, une enveloppe de produit alimentaire à base de textile, une enveloppe de produit alimentaire à base de collagène ou une enveloppe de produit alimentaire à base de polymère.

7. Procédé selon l'une quelconque des revendications précédentes, dans lequel le triglycéride est un triglycéride à chaîne moyenne [CAS n° 73398-61-5].

8. Procédé selon l'une quelconque des revendications précédentes, dans lequel l'agent solubilisant est choisi dans le groupe comprenant le stéarate de polyoxyéthylène (40) ; le monolaurate de polyoxyéthylène-sorbitane (polysorbate 20) ; le monooléate de polyoxyéthylène-sorbitane (polysorbate 80) ; le monopalmitate de polyoxyéthylène-sorbitane (polysorbate 40) ; le monostéarate de polyoxyéthylène-sorbitane (polysorbate 60) ; le tristéarate de polyoxyéthylène-sorbitane (polysorbate 65); la pectine ; la pectine amidée ; des phosphatides d'ammonium ; l'isobutyrate d'acétate de saccharose ; l'ester de glycérol provenant de la résine de bois; le diphosphate ; le triphosphate ; le polyphosphate ; la cellulose ; la méthylcellulose ; l'hydroxypropylcellulose ; l'hydroxypropylméthylcellulose ; l'éthylméthylcellulose ; la carboxyméthylcellulose ; des sels de sodium, potassium et calcium d'acides gras ; des monoglycérides et diglycérides d'acides gras ; des esters d'acide acétique de monoglycérides et diglycérides d'acides gras ; des mono- et diglycérides d'acides gras, estérifiés avec de l'acide lactique (ester d'acide lactique) ; des monoglycérides d'acides gras, estérifiés avec de acide citrique (ester d'acide citrique) ; des monoglycérides et diglycérides d'acides gras, estérifiés avec de acide tartrique (ester d'acide tartrique) ; des monoglycérides et diglycérides d'acides gras estérifiés avec de acide acétyltartrique ; des monoglycérides et diglycérides d'acides gras, estérifiés avec de acide acétique et de l'acide tartrique (ester d'acide acétique-ester d'acide tartrique) ; des sucroesters d'acides gras ; des sucroglycérides ; des esters de polyglycérol d'acides gras ; du polyricinoléate de polyglycérol ; des esters de propylène glycol d'acides gras ; du stéaroyl-2-lactylate de sodium ; du stéaroyl-2-lactylate de calcium ; du tartrate de stéaroyle ; du monostéarate de sorbitane ; du tristéarate de sorbitane ; du monolauréate de sorbitane ; du monooléate de sorbitane ; du monopalmitate de sorbitane.

9. Procédé selon l'une quelconque des revendications précédentes, dans lequel après application du mélange d'imprégnation aqueux sur l'enveloppe de produit alimentaire, celui-ci est recueilli.

10. Enveloppe de produit alimentaire produite par un procédé selon l'une quelconque des revendications 1 à 9.

11. Saucisse comprenant une enveloppe de produit alimentaire selon la revendication 10 ainsi que de la chair à saucisse enfermée dans l'enveloppe de produit alimentaire.

12. Utilisation d'un mélange d'imprégnation contenant une substance à action biocide sous la forme d'un solubilisat micellisé pour un traitement biocide d'une enveloppe de produit alimentaire à base de cellulose, dans laquelle le solubilisat micellisé comprenant également un triglycéride et un agent solubilisant en plus de la substance à action biocide, **caractérisée en ce que** le mélange d'imprégnation est un mélange d'imprégnation aqueux, dans laquelle dans le mélange d'imprégnation aqueux est en outre mélangée au moins une substance à action biocide supplémentaire et dans laquelle la substance à action biocide et la substance à action biocide supplémentaire sont sélectionnées indépendamment l'une de l'autre dans le groupe comprenant extrait d'agrume, extrait de thym, extrait de romarin, extrait de sauge, extrait d'origan, extrait de clou de girofle, extrait de cannelle, extrait de cassis, extrait de soja, extrait de thé vert, extrait d'ail, extrait d'olive, extrait d'oignon, extrait de poireau, extrait de graines de citrouille, extrait de mélisse citronnelle, extrait de racine de pélargonium, extrait de camomille vraie, extrait de curcuma, huile de pépins de raisin.
